# EUROPÄISCHE PATENTANMELDUNG

(11) **EP 2 042 534 A1**
(43) Veröffentlichungstag der Anmeldung: **01.04.2009**
(21) Anmeldenummer: 08161621.1
(22) Anmeldetag: 01.08.2008
(51) Int. Cl.: C08G 18/16, C08G 18/18

(54) **Aminkatalysatoren geeignet zur Herstellung emissionsarmer, rekatalysestabiler Polyurethanweichschaumstoffe**

(30) Priorität: 28.09.2007 DE 102007046860
(71) Anmelder: Evonik Goldschmidt GmbH, 45127 Essen (DE)
(72) Erfinder: Terheiden, Annegret, 47051, Duisburg (DE); Hubel, Roland, 45128, Essen (DE); Schloens, Hans-Heinrich, 45289, Essen (DE); Landers, Rüdiger, 45257, Essen (DE)

(57) **Zusammenfassung**

Der Gegenstand der vorliegenden Erfindung betrifft die Verwendung eines reaktiven Aminkatalysators, insbesondere Diethylaminoethoxyethanol und/oder Diethylethanolamin, in wässrigen oder organischen Lösungen zur Herstellung von Polyurethanweichschaumstoffen mit erhöhter Rekatalysestabilität, sowie eine Katalysatorkombination enthaltend wenigstens einen erfindungsgemäß verwendbaren reaktiven Aminkatalysator; und wenigstens eine Kalium-, Zinn- und/oder Zink-organische-Verbindung; und/oder wenigstens ein tertiäres Amin ausgewählt aus der Gruppe umfassend Triethylendiamin, Triethylamin und/oder Silamorpholin; und/oder wenigstens ein säureblockiertes Derivat eines tertiären Amins.

## Beschreibung

Gegenstand der Erfindung ist die Verwendung von Aminkatalysatoren zur Herstellung von emissionsarmen, rekatalysestabilen Polyurethanweichschaumstoffen, eine geeignete Katalysatorkombination sowie daraus hergestellte Polyurethanweichschaumstoffe.

Polyurethanweichschaumstoffe werden in einer Vielzahl von technischen Anwendungen in Industrie und privatem Bereich eingesetzt, beispielsweise zur Geräuschdämmung, zur Herstellung von Matratzen oder zur Polsterung von Möbeln. Einen besonders wichtigen Markt für verschiedenste Typen von PU-Schäumen, wie konventionelle Weichschaumstoffe auf Ether- und Esterpolyolbasis, Kaltschäume (häufig auch als HR bezeichnet) und Hartschäume, sowie Schäume deren Eigenschaften zwischen diesen Klassifizierungen liegen, stellt die Automobilindustrie dar.

Die Herstellung der Polyurethanweichschaumstoffe erfolgt üblicherweise durch Umsetzung von Di- und Polyisocyanaten mit Verbindungen, die mindestens zwei mit Isocyanatgruppen reaktive Wasserstoffatome enthalten, in Gegenwart von Treibmitteln und üblichen Hilfs- und Zusatzstoffen.

Nachteilig ist, dass von den meisten Polyurethan-Schaumstoffen flüchtige organische Verbindungen, beispielsweise Dimethylformamid (DMF), emittiert werden. Diese Emissionen stellen für viele Anwendungsgebiete, beispielsweise Automobilindustrie einen massiven Qualitätsmangel dar.

Insbesondere bei Möbeln und Matratzen stellen Emissionen, beispielsweise Dimethylformamid (DMF), einen massiven Qualitätsmangel dar oder sind bei Überschreitung von Höchstgrenzen sogar gesundheitsgefährdend.

Es besteht daher ein zunehmender Bedarf nach emissionsarmen Schaumstoffen.

Eine wesentliche Quelle der Emissionen bei Schaumstoffen stellen flüchtige Aminkatalysatoren sowie Verunreinigungen derselben, wie Dimethylformamid, dar.

Zur Vermeidung von Emissionen bei Schaumstoffen wurden im Stand der Technik reaktive Aminkatalysatoren verwendet, die im Polyurethanschaum chemisch gebunden sind.
Häufig eingesetzte, reaktive Aminkatalysatoren weisen Dimethylaminogruppen auf. Ein Nachteil der auf dem Markt erhältlichen einbaubaren Verbindungen, beispielsweise des Dimethylaminoethoxyethanols, stellt jedoch die so genannte Rekatalyse dar. Dadurch verschlechtern sich die mechanischen Eigenschaften des Polyurethanschaums mit der Zeit. Darüber hinaus können bei der Rekatalyse flüchtige Verbindungen entstehen, die wiederum zur Emission beitragen können.

Neben dem Nachteil, dass solche Polyurethanschäume zur Rekatalyse neigen, d.h. es tritt eine Zerstörung des Polyurethanschaums auf, weisen entsprechend hergestellte Polyurethanweichschaumstoffe häufig ein unzureichendes Brennverhalten auf.

Die Aufgabe der vorliegenden Erfindung besteht darin, Polyurethanweichschaumstoffe bereitzustellen, die wenigstens einen der vorbeschriebenen Nachteile des Standes der Technik überwindet.

Eine weitere Aufgabe der vorliegenden Erfindung kann darin bestehen, Aminkatalysatoren für Polyurethanweichschaumstoffe bereitzustellen, die keine oder eine deutlich verminderte Amin-emission, insbesondere DMF-Emission, bei gleichzeitig hoher Katalyseaktivität unter Erhalt guter Schaumeigenschaften, aufweisen. Werden zur Herstellung von Polyurethanweichschaumstoffen Aminkatalysatoren verwendet, die als Struktureinheit eine Dimethylaminogruppe enthalten, so emittieren die resultierenden Schäume Dimethylformamid häufig in so hohen Konzentrationen, dass dies zu einem Nichtbestehen von so genannten Öko-Tests führen kann. Dimethylformamid ist toxikologisch bedenklich, da es sich mit größter Wahrscheinlichkeit teratogen auf das ungeborene Kind auswirkt.

Noch eine Aufgabe der vorliegenden Erfindung kann darin bestehen, Aminkatalysatoren für Polyurethanweichschaumstoffe bereitzustellen, die nach Temperaturbehandlung zu keiner oder gegenüber Dimethylaminogruppen aufweisenden Aminkatalysatoren zu einer deutlich verminderten Rekatalyse bei Polyurethanweichschaumstoffen führen.

Noch eine weitere Aufgabe der vorliegenden Erfindung kann darin bestehen, Aminkatalysatoren für Polyurethanweichschaumstoffe bereitzustellen, die gegenüber Dimethylaminogruppen aufweisenden Aminkatalysatoren ein erheblich verbessertes Brennverhalten aufweisen.

Die Aufgabe der vorliegenden Erfindung wird gelöst, indem wenigstens ein reaktiver Aminkatalysator in wässrigen oder organischen Lösungen zur Herstellung von Polyurethanweichschaumstoffen, insbesondere offenzelligen Polyurethanweichschaumstoffen, mit erhöhter Rekatalysestabilität, verwendet wird, wobei der Aminkatalysator die nachstehende Formel aufweist:

Z-R-Y (1)

R = Polyetherrest der Formel (2)

-(R¹-O)ₙ-R²- (2)

mit der Maßgabe, dass n = 0-6 oder ein Amin der Formel (3) oder (4) 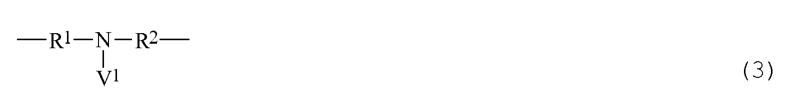 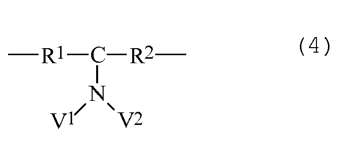 oder ein Amid der Formel (5) oder (6) 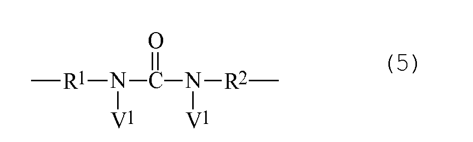 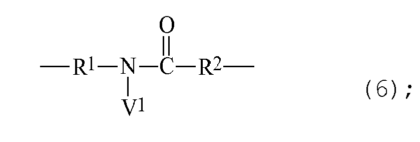 worin
R¹, R² = gleich oder ungleich voneinander, ein linearer, verzweigter oder cyclischer, aliphatischer oder aromatischer, gesättigter oder ungesättigter, gegebenenfalls mit einem Heteroatom substituierter, Kohlenwasserstoffrest mit C₂ bis C₁₀ Kohlenstoffatomen ist,

V¹, V² = -(R¹-O)ₘ-R³ (7)

mit der Maßgabe, dass m = 0 bis 15 ist, und
R³, R⁴ = gleich oder unabhängig voneinander H oder R¹;
Y = H, OH, R, R¹ oder ein Aminrest der Formel (8), (9), (10), (11) oder (12) 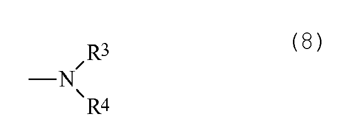 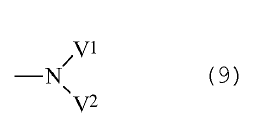 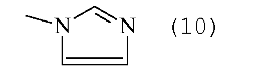 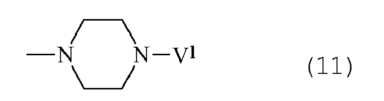 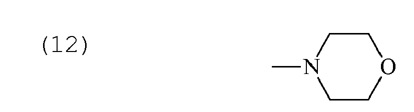 Z = Aminrest der vorstehenden Formeln (8), (9), (10), (11), (12) oder ein Amidrest der nachstehenden Formel (13) ist, 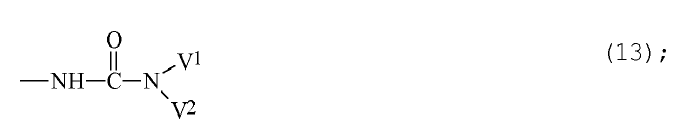 wobei die im Schaum verbleibenden Amine mindestens eine H-acide Gruppierung und/oder ein Molekulargewicht von ≥ 200 g/mol und ≤ 5000 g/mol aufweisen.

Vorteilhaft ist, dass die mittels erfindungsgemäßen Aminkatalysator sowie mittels Katalysatorkombination hergestellten Polyurethanweichschaumstoffe hinsichtlich der eingesetzten Aminkatalysatoren emissionsarm sind. Vorteilhaft ist insbesondere, dass die mittels erfindungsgemäßen Aminkatalysator sowie mittels Katalysatorkombination hergestellten Polyurethanweichschaumstoffe DMF-frei (DMF = Dimethylformamid) oder DMFemissionsarm sind.

"Emissionsarm" hinsichtlich Dimethylformamid (DMF) bedeutet im Sinne der vorliegenden Erfindung, dass der Polyurethanweichschaum eine DMF-Emission von ≥ 0 µg/m³ und ≤ 5 µg/m³, vorzugsweise ≤ 1µg/m³ und besonders bevorzugt ≤ 0.1 µg/m³ aufweist, ermittelt nach dem Prüfkammerverfahren DIN 13419-1, 24 Stunden nach Prüfkammerbeladung.

"Emissionsarm" hinsichtlich eingesetzter Aminkatalysatoren bedeutet im Sinne der vorliegenden Erfindung, dass der Polyurethanweichschaum eine Amin-Emission von ≥ 0 µg/g und ≤ 20 µg/g, vorzugsweise ≤ 10 µg/g und besonders bevorzugt ≤ 5 µg/g aufweist, entsprechend der Daimler-Chrysler-Prüfanweisung BP VWT709 VOC-Bestimmung, 30 Minuten bei 90°C.

Der Begriff "Amin-Emission" beinhaltet nicht die DMF-Emission.

Das Molekulargewicht der Amine kann auch ≥ 300 g/mol und ≤ 3000 g/mol oder ≥ 500 g/mol und ≤ 1000 g/mol sein, wobei Amin-Katalysatoren mit niedrigerem Molekulargewicht aufgrund der höheren Katalysegeschwindigkeit bevorzugt sind.

Ein weiteres wesentliches Merkmal der Kaltweichschäume ist die Rückprallelastizität " ball rebound". Ein Verfahren zur Ermittlung der Rückprallelastizität ist beispielsweise in der ISO 8307 beschrieben. Hierbei wird eine Stahlkugel mit festgelegter Masse aus einer bestimmten Höhe auf den Probenkörper fallen gelassen und dann die Höhe des Rückpralls in % der Abwurfhöhe gemessen. Typische Werte für einen Kaltweichschaum liegen im Bereich von ≥ 55%. Demgegenüber weisen Heißweichschäume oder Polyurethanesterweichschäume, nachfolgend auch Esterschäume genannt, Rückprall-Werte von maximal 30% - 48% auf.

Zur Herstellung eines Polyurethankaltweichschaums wird ein Gemisch aus Polyol, polyfunktionellem Isocyanat, erfindungsgemäße Katalysatorkombination, Stabilisator, Treibmittel üblicherweise Wasser zur Bildung von CO₂ und gegebenenfalls einem Zusatz von physikalischen Treibmitteln, gegebenenfalls unter Zugabe von weiteren Zusätzen, wie Flammschutzmitteln, Farbpasten, Füllstoffen, Vernetzern oder sonstigen üblichen Verarbeitungshilfsmitteln, umgesetzt.

Der entscheidende Unterschied zum Heißschaum besteht bei der Kaltweichschaumherstellung darin, dass zum einen hochreaktive Polyole und optional auch niedermolekulare Vernetzer eingesetzt werden, wobei die Funktion des Vernetzers auch durch höherfunktionelle Isocyanate übernommen werden kann. Somit kommt es bereits in der Expansionsphase (CO₂-Bildung aus -NCO und H₂O) des Schaums zu der Reaktion der Isocyanatgruppen mit den Hydroxylgruppen. Diese schnelle Polyurethanreaktion führt über den Viskositätsanstieg zu einer relativ hohen Eigenstabilität des Schaums während des Treibvorgangs.

Bei Polyurethankaltweichschäumen handelt es sich folglich um hochelastische Schäume bei denen die Randzonenstabilisierung eine große Rolle spielt. Aufgrund der hohen Eigenstabilität sind die Zellen am Ende des Schäumvorgangs oft nicht genügend geöffnet und es muss noch mechanisch aufgedrückt werden. Hierbei gibt die notwendige Aufdrückkraft ein Maß für die Offenzelligkeit. Wünschenswert sind Schäume mit hoher Offenzelligkeit, die lediglich geringe Aufdruckkräfte benötigen. Bei der Formverschäumung werden Polyurethankaltweichschäume im Gegensatz zu Polyurethanheißweichschäumen bei einer Temperatur, beispielsweise von ≤ 90° C, hergestellt.

Offenzellige Polyurethanweichschaumstoffe weisen eine Gasdurchlässigkeit in einem Bereich von 1 bis 50 mm Wassersäule, insbesondere in einem Bereich von 1 bis 30 mm Wassersäule (bestimmt durch Messung der Druckdifferenz bei der Durchströmung einer Schaumprobe) auf. Hierfür wird eine 5 cm dicke Schaumscheibe auf eine glatte Unterlage gelegt. Eine 800 g schwere Platte (10 cm x 10 cm) mit zentraler Bohrung (Durchmesser 2 cm) und einem Schlauchanschluss wird auf der Schaumprobe plaziert. Über die zentrale Bohrung wird ein konstanter Luftstrom von 8 l/min in die Schaumprobe geleitet. Die auftretende Druckdifferenz (relativ zu ungehindertem Ausströmen) wird mittels einer Wassersäule in einem graduierten Druckmesser ermittelt. Je geschlossener der Schaum ist, desto mehr Druck wird aufgebaut und desto mehr wird der Spiegel der Wassersäule nach unten gedrückt und desto größere Werte werden gemessen.

Bei den Weichschäumen unterscheidet man neben Polyurethankaltweichschäumen und Polyurethanheißweichschäumen noch Polyurethanesterschäume.

Bei Polyurethanesterschäumen handelt es sich um Schäume mit einer sehr regelmäßigen Zellstruktur. Eine unregelmäßige Struktur (sog. Schwammstruktur) kann man durch eine gezielte Schaumstörung erhalten. Polyurethanesterschäume sind durch die Umsetzung von Diisocyanaten mit Hydroxylgruppen enthaltenden Polyestern, beispielsweise gebildet durch Umsetzung von Dicarboxylsäuren und Polyhydroxyalkoholen, erhältlich. Substanzen, die sich für eine gezielte Schaumstörung eignen sind beispielsweise Polydimethylsiloxanverbindungen mit einem Molekulargewicht von ≥ 40.000 g/mol. Solche für die Schaumstörung verwendbaren Polysiloxanverbindungen weisen häufig eine Viskosität von mindestens 4.000 mPas oder höher auf.

Erfindungsgemäß wurde nunmehr gefunden, dass durch die Verwendung der beanspruchten Aminkatalysatoren Polyurethanweichschaumstoffe erhalten werden, welche gegenüber Polyurethanweichschaumstoffen, die man unter Verwendung von Dimethylaminoethoxyethanol erhält, eine deutlich verbesserte Alterungsbeständigkeit aufweisen, d.h. man erhält Polyurethanweichschaumstoffe, die keine oder eine zumindest deutlich reduzierte Rekatalyseaktivität besitzen.

Wie in den Beispielen gezeigt, wird bei der Verwendung von Dimethylaminoethoxyethanol der Polyurethanweichschaumstoff nach einer einstündigen Temperierung bei 180°C völlig zerstört. Demgegenüber weist der Polyurethanweichschaumstoff bei Verwendung der erfindungsgemäß beanspruchten Aminkatalysatoren, in Abhängigkeit des verwendeten Aminkatalysators, eine stabile Poly-urethanweichschaumstoff-Struktur auf.

Ein weiterer Vorteil der erfindungsgemäßen Aminkatalysatoren gegenüber dem Dimethylaminoethoxyethanol besteht darin, dass diese trotz längerer Alkylketten, zumindest teilweise eine vergleichbare katalytische Aktivität in Bezug auf die Polyurethan-Bildung aufweisen und zusätzlich die Rekatalyse nicht begünstigen.

Noch ein Vorteil der Verwendung der erfindungsgemäßen Aminkatalysatoren besteht darin, dass der resultierende Polyurethanweichschaumstoff frei von Dimethylformamid oder nahezu frei von Dimethylformamid ist.

Gemäß einer weiteren bevorzugten Ausführungsform der Erfindung können zur Herstellung von Polyurethanweichschaumstoffen reaktive Amine verwendet werden, wobei der Aminkatalysator die nachstehende Formel 14 aufweist:

R³R⁴N-(R¹-O)ₙR²-Y (14)

worin
- R¹, R² =: ist gleich oder ungleich voneinander ein linearer, ein verzweigter, ein cyclischer, oder ein aromatischer Alkylenrest mit C₂ bis C₈-Kohlenstoffatomen;
- R³, R⁴=: ist gleich oder ungleich voneinander ein linearer, ein verzweigter, ein cyclischer, oder ein aromatischer Kohlenwasserstoffrest mit C₂ bis C₈-Kohlenstoffatomen;
- n =: eine ganze Zahl von 0 - 6; vorzugsweise 1 - 4;
- Y =: -OH oder -NH₂.

Diese vorstehend genannten reaktiven Amine mit der Formel R³R⁴N-(R¹-O)ₙR²-Y weisen eine gegenüber den anderen erfindungsgemäß beanspruchten reaktiven Aminkatalysatoren gesteigerte Katalysatoraktivität auf, sowie keine oder praktisch keine Rekatalyseaktivität nach einer einstündigen Temperierung des damit hergestellten Polyurethanweichschaumstoffs bei 180°C auf, wobei erfindungsgemäßes reaktives Amin an den Polyurethanweichschaumstoff chemisch gebunden ist.

Die nachstehend genannten erfindungsgemäßen reaktiven Aminkatalysatoren weisen unter den vorstehend genannten Aminkatalysatoren eine noch weiter verbesserte Katalysatoraktivität auf, sowie so gut wie keine Rekatalyseaktivität, gemessen nach einer einstündigen Temperierung des damit hergestellten Polyurethanweichschaumstoffs bei 180°C, auf, wobei erfindungsgemäßes reaktives Amin an den Polyurethanweichschaumstoff chemisch gebunden ist. Diese reaktiven Aminkatalysatoren mit weiter verbesserten Eigenschaften weisen die nachstehende Formel 15 auf:

R³R⁴N-(R¹-O)ₙR²-Y (15)

worin
- R¹, R²=: ist gleich oder ungleich voneinander ein linearer Alkylenrest mit C₂-, C₃- oder C₄-Kohlenstoffatomen;
- R³, R⁴=: ist gleich oder ungleich voneinander ein linearer Kohlenwasserstoffrest mit C₂-, C₃- oder C₄-Kohlenstoffatomen;
- n =: 0, 1, 2 oder 3, vorzugsweise 1 oder 2;
- Y =: -OH oder -NH₂.

Verwendet man nun beispielsweise Diethylaminoethoxyethanol anstelle von Dimethylaminoethoxyethanol zur Herstellung von PU-Weichschaumstoffen, so zeichnen sich die resultierenden Polyurethanweichschaumstoffe durch eine deutlich verbesserte Alterungsbeständigkeit aus. Während bei der Verwendung von Dimethylaminoethoxyethanol der Polyurethanweichschaumstoff nach einer einstündigen Temperierung bei 180°C völlig zerstört ist, weist der Schaum mit Diethylaminoethoxyethanol keine Veränderung der Schaumstruktur auf.

Der entscheidende Vorteil des Diethylaminoethoxyethanols gegenüber dem Dimethylaminoethoxyethanol besteht somit darin, dass es sich hierbei um ein einbaubares emissionsarmes Amin handelt, welches eine vergleichbare katalytische Aktivität in Bezug auf die Polyurethan-Bildung aufweist, die Rekatalyse jedoch nicht begünstigt.

Ein weiterer Vorteil der Verwendung von Diethylaminoethoxyethanol ergibt sich daraus, dass der resultierende Polyurethanweichschaumstoff frei von Dimethylformamid ist.

Ein weiterer Gegenstand der vorliegenden Erfindung betrifft eine Katalysatorkombination zur Herstellung von Polyurethanweichschaumstoffen, insbesondere offenzelligen Polyurethanweichschaumstoffen, mit erhöhter Rekatalysestabilität, wobei die Katalysatorkombination wenigstens einen erfindungsgemäß verwendbaren Aminkatalysator und
- wenigstens eine Kalium-, Zink- und/oder Zinn-organische-Verbindung; und/oder
- wenigstens ein tertiäres Amin ausgewählt aus der Gruppe umfassend Triethylendiamin, Triethylamin und/oder Silamorpholin, wobei Silamorpholin, insbesondere 2,2,4-Trimethyl-2-Silamorpholin besonders bevorzugt ist; und/oder
- wenigstens ein säureblockiertes Derivat eines tertiären Amins; aufweist.

Weiter bevorzugt kann eine Katalysatorkombination sein, umfassend:
- Diethylaminoethoxyethanol und/oder Diethylethanolamin; und
- wenigstens eine Kaliumverbindung, ausgewählt ist aus der Gruppe umfassend Kalium(2-ethyl-hexanoat) und/oder Kaliumacetat, Zink- und/oder Zinn-organische-Verbindung aus Salzen der Oktansäure, Ricinolsäure, Essigsäure, Ölsäure, Laurinsäure und/oder Hexansäure; und/oder als Chelatkomplex mit Acetylaceton, Benzoylaceton, Trifluoracetylaceton, Ethylacetocetat, Salicylaldehyd, Cyclopentanon-2-carboxylat, Salicylaldehydimin; und/oder
- wenigstens ein tertiäres Amin ausgewählt aus der Gruppe umfassend Triethylendiamin, Triethylamin und/oder Silamorpholin, wobei Silamorpholin, insbesondere 2,2,4-Trimethyl-2-Silamorpholin besonders bevorzugt ist; und/oder
- wenigstens ein säureblockiertes Derivat eines tertiären Amins.

Noch bevorzugter kann eine Katalysatorkombination sein, umfassend:
- Diethylaminoethoxyethanol und/oder Diethylethanolamin; und
- wenigstens eine Kaliumverbindung, ausgewählt ist aus der Gruppe umfassend Kalium(2-ethyl-hexanoat) und/oder Kaliumacetat, Zink- und/oder Zinn-organische-Verbindung aus Salzen der Ricinolsäure und/oder 2-Ethylhexansäure, vorzugsweise Zinn(II)octoat, Zink(II)octoat, Zinnrizinoleat und/oder Zinkrizinoleat; und
- wenigstens ein tertiäres Amin ausgewählt aus der Gruppe Triethylendiamin, Triethylamin und/oder Silamorpholin, wobei Silamorpholin, insbesondere 2,2,4-Trimethyl-2-Silamorpholin besonders bevorzugt ist.

Die einzelnen Komponenten der Katalysatorkombination können der Isocyanat- und Polyol-Reaktionsmischung gleichzeitig oder nacheinander zugegeben werden.

Bevorzugt ist hierbei die Kombination der erfindungsgemäßen Aminkatalysatoren mit Silamorpholin, insbesondere 2,2,4-Trimethyl-2-Silamorpholin.

Besonders bevorzugt kann die erfindungsgemäße Verwendung von Diethylethanolamin in Kombination mit Silamorpholin, insbesondere 2,2,4-Trimethyl-2-Silamorpholin oder von Diethylaminoethoxyethanol in Kombination mit Silamorpholin, insbesondere 2,2,4-Trimethyl-2-Silamorpholin als Aminkatalysator sein. Am meisten bevorzugt ist die Verwendung von Diethylaminoethoxyethanol gegenüber Diethylethanolamin, da Diethylaminoethoxyethanol gegenüber Diethylethanolamin die Rekatalyse noch besser verhindert.

Die zur Herstellung von PU-Weichschäumen eingesetzten Aminkatalysatoren wirken teilweise nicht spezifisch auf nur eine Reaktion, d.h. sie katalysieren sowohl die Gasbildungsreaktion (Treibreaktion) als auch die Vernetzungsreaktion (Gelreaktion). Inwieweit nun die Gasbildungsreaktion oder die Vernetzungsreaktion stärker katalysiert wird, hängt von der Struktur des jeweiligen erfindungsgemäß verwendbaren Amins ab. So katalysiert beispielsweise das Diethylaminoethoxyethanol stärker die Treibreaktion, während das Amin Silamorpholin, insbesondere 2,2,4-Trimethyl-2-Silamorpholin die Vernetzungsreaktion stärker katalysiert. Eine Kombination beider Produkte ermöglicht somit eine optimale Einstellung/Abstimmung der Reaktionsgeschwindigkeit. Ein weiterer Vorteil des Amins Silamorpholin besteht darin, dass es im Unterschied zu den sonst zur Herstellung von Weichschaumstoffen eingesetzten Aminen neben seiner katalytischen Wirksamkeit auch Tensideigenschaften besitzt, die die Mischbarkeit von Wasser mit den Reaktionspartnern/Komponenten/Additiven erleichtert.

Der Silamorpholingehaltsanteil an der Katalysatorkombination kann 0,5 bis 10 Gewichtsprozent, vorzugsweise 1 bis 8 Gewichtsprozent und bevorzugt 1,5 bis 7 Gewichtsprozent, bezogen auf die Menge des erfindungsgemäßen Aminkatalysators, ausmachen.

Besonders bevorzugt kann auch die Verwendung von Triethylendiamin als Bestandteil der Katalysatorkombination sein. Die einzelnen Komponenten können der Isocyanat- und Polyol-Reaktionsmischung gleichzeitig oder nacheinander zugegeben werden.

Die Verwendung von Trimethylamin und/oder Dimethylsubstituierten Aminen kann erfindungsgemäß ausgeschlossen sein. Vorzugsweise kann die Katalysatorkombination frei von Trimethylamin und/oder Dimethylsubstituierten Aminen sein.

Der Zusatz von Silamorpholin, insbesondere 2,2,4-Trimethyl-2-Silamorpholin zu den erfindungsgemäß verwendbaren Aminkatalysatoren und/oder Katalysatorkombination ist besonders bevorzugt, da hierdurch die Katalysegeschwindigkeit zusätzlich erhöht werden kann, ohne das aufgrund des Zusatzes von Silamorpholin eine Rekatalyse des Polyurethanweichschaums einsetzt bzw. hervorgerufen wird. Die einzelnen Komponenten können der Isocyanat- und Polyol-Reaktionsmischung gleichzeitig oder nacheinander zugegeben werden.

Es kann erfindungsgemäß bevorzugt sein, dass die Katalysatorkombination frei von Methyl-substituierten Aminen ist.

Die Verwendung von zusätzlichen Katalysatoren, wie organischen Metallsalzen und/oder metallorganischen Verbindungen, kann bei reaktiven Aminen eine Rekatalyse begünstigen, da sowohl die Metallsalze und /oder metallorganischen Verbindungen als auch die reaktiven Amine, soweit diese zumindest kovalent an den Polyurethanweichschaumstoff gebunden sind, im offenzelligen Polyurethanweichschaumstoff verbleiben.

Es wurde nun überraschend gefunden, dass die Verwendung einer Katalysatorkombination umfassend organische Salze der Metalle Kalium, Zink und/oder Zinn sowie erfindungsgemäß beanspruchte Amin-Katalysatoren, die Katalysereaktion deutlich in Richtung Polyurethanweichschaumstoff-Bildung begünstigt und trotzdem eine Rekatalyse des Polyurethanweichschaumstoffs, selbst nach einer einstündigen Temperierung des so hergestellten Polyurethanweichschaumstoffs bei 180°C, nicht begünstigt.
Demgegenüber führt eine Katalysatorkombination von organischen Salzen der Metalle Kalium-, Zink und/oder Zinn mit Dimethylaminoethoxyethanol unter ansonsten gleichen Bedingungen zur vollständigen Zerstörung des Polyurethanweichschaumstoffs.

Als besonders geeignete Aminkatalysatoren für die Katalysatorkombination haben sich die erfindungsgemäßen Aminkatalysatoren der Formel 14, mit weiter verbesserter Katalyseaktivität die Aminkatalysatoren der Formel 15 und als besonders bevorzugt Diethylaminoethoxyethanol erwiesen.

Die erfindungsgemäß verwendbaren Kaliumverbindungen können ausgewählt sein aus der Gruppe umfassend Kalium(2-ethyl-hexanoat) und/oder Kaliumacetat.

Die erfindungsgemäß verwendbaren Zink- und/oder Zinn-organischen-Katalysatoren, die für die Katalysatorkombination geeignet sind, können ausgewählt sein aus der Gruppe der Metallsalze organischer Säuren und /oder der Gruppe der Chelatkomplexe.

Als organische Säuren kommen beispielsweise Oktansäure, Ricinolsäure, Essigsäure, Ölsäure, Laurinsäure und Hexansäure in Betracht, als Komplexbildner kommen beispielsweise Acetylaceton, Benzoylaceton, Trifluoracetylaceton, Ethylacetoacetat, Salicylaldehyd, Cyclopentanon-2-carboxylat, Salicylaldehydimin in Betracht. Besonders bevorzugt sind dabei Zink- und/oder Zinn-organische-Verbindung die aus Salzen der Ricinolsäure und/oder 2-Ethylhexansäure bestehen.

Insbesondere können Zinnverbindungen oder Zinkverbindungen mit vollständig oder teilweise kovalent angebundenen organischen Resten bevorzugt sein.

Bevorzugt kann Zinn(II)octoat und/oder Zinnrizinoleat für die Katalysatorkombination verwendet werden.

Die Verwendung von Dibutylzinndilaurat und/oder Dibutylzinkdilaurat kann erfindungsgemäß ausgenommen sein.

Besonders gute Polyurethanweichschaumstoff-Eigenschaften erhält man, wenn man eine Katalysatorkombination verwendet, die 0,01 bis 3 Gewichtsteile Amin-Katalysator und 0,01 bis 2 Gewichtsteile Kalium-, Zink- und/oder Zinn-organische-Verbindung, bezogen auf 100 Gewichtsteile Polyol, aufweist.

Die Formulierung "Polyol" im Sinne dieser Erfindung ist das Polyol oder Polyolgemisch, dass zur Herstellung des jeweiligen Polyurethanweichschaumstoffs verwendet wird.

Gute Kompressionseigenschaften, Zugeigenschaften, Bruchdehnungseigenschaften des Polyurethanweichschaumstoffs, die auch nach Temperaturbehandlung im Wesentlichen bestehen bleiben, lassen sich durch eine gezielte Einstellung der molaren Mengenverhältnisse von Aminkatalysator und der Kalium-, Zink- und/oder Zinn-organischen-Verbindung erreichen.

Es kann daher erfindungsgemäß bevorzugt sein, wenn die Katalysatorkombination den Aminkatalysator und die Kalium-, Zink- und/oder Zinn-organische-Verbindung, in einem molaren Mengenverhältnis von 1:0,05 bis 0,05:1 vorzugsweise 1:0,07 bis 0,07:1 und bevorzugt 1:0,1 bis 0,1:1 aufweist.

Die Katalysatorkombination kann als weitere Komponenten zusätzlich Wasser und einen Stabilisator, vorzugsweise ein Polyethersiloxan, aufweisen. Die einzelnen Komponenten können der Isocyanat- und Polyol-Reaktionsmischung gleichzeitig oder nacheinander zugegeben werden.

Um eine Reaktion der Komponenten untereinander zu vermeiden, insbesondere zwischen dem erfindungsgemäß verwendbaren Aminkatalysator und der Kalium-, Zink- und/oder Zinnorganischen-Verbindung kann es bevorzugt sein, diese Komponenten getrennt voneinander zu lagern und dann der Isocyanat- und Polyol-Reaktionsmischung gleichzeitig oder nacheinander zuzuführen.

Die Katalysatorkombination kann zusätzlich Treibmittel, Biozide, Antioxidantien, Puffersubstanzen, Tensid und/oder Flammschutzmittel aufweisen.

Es versteht sich von selbst, dass der Fachmann zur Herstellung der unterschiedlichen Polyurethanweichschaumstoff-Typen, d.h. Heiß-, Kalt- oder Ester-Polyurethanweichschaumstoffe, die hierfür jeweils notwendigen Substanzen, wie Isocyanat, Polyol, Stabilisatoren, Tensid, etc. entsprechend auswählt, um den jeweils gewünschten Polyurethanweichschaumstoff-Typ zu erhalten.

Nachstehend sind eine Reihe von Schutzrechten angegeben, die geeignete Komponenten und Verfahren zur Herstellung der unterschiedlichen Polyurethanweichschaumstoff-Typen, d.h. Heiß, Kalt- sowie Ester-Polyurethanweichschaumstoffe beschreiben, auf die im vollen Umfang Bezug genommen wird.

EP 0152878 A1; EP 0409035 A2; DE 102005050473 A1; DE 19629161 A1; DE 3508292 A1; DE 4444898 A1; EP 1061095 A1.

Weitere Angaben zu den verwendeten Ausgangsstoffen, Katalysatoren sowie Hilfs- und Zusatzstoffen finden sich beispielsweise im Kunststoff-Handbuch, Band 7, Polyurethane, Carl-Hanser-Verlag München, 1. Auflage 1966, 2. Auflage, 1983 und 3. Auflage, 1993.
Die nachstehenden Verbindungen, Komponenten und Additive sind lediglich beispielhaft genannt und können durch andere dem Fachmann bekannte Stoffe ersetzt werden.

Die erfindungsgemäßen Polyurethanweichschaumstoffe können Tenside, die nachstehend auch als "Emulgatoren" bezeichnet werden, enthalten.

Tenside, die bei der Herstellung von Polyurethanweichschaumstoffen eingesetzt werden, können ausgewählt sein aus der Gruppe umfassend anionische Tenside, kationische Tenside, nichtionische Tenside und/oder amphotere Tenside.

Als Tenside können erfindungsgemäß auch polymere Emulgatoren, wie Polyalkylpolyoxyalkylpolyacrylate, Polyvinylpyrrolidone oder Polyvinylacetate verwendet werden.

Als Biozide können handelsübliche Produkte verwendet werden, wie Chlorophen, Benzisothiazolinon, Hexahydro-1,3,5-tris(hydroxyethyl-s-triazin), Chlor-methyl-isothiazolinon, Methyl-isothiazolinon oder 1,6-Dihydroxy-2,5-dioxohexan, die unter den Handelsnamen BIT 10, Nipacide BCP, Acticide MBS, Nipacide BK, Nipacide CI, Nipacide FC bekannt sind.

Für die Herstellung der Polyurethanweichschaumstoffe können die dem Fachmann bekannten Verfahren zur Herstellung von Emulsionen, wie Pastenverfahren, Homogenisierung mittels Hochdruckhomogenisator, Rühr-Verfahren etc. verwendet werden, wie auch in der DE 3024870 beschrieben, auf die hier im vollem Umfang Bezug genommen wird.

Oftmals werden alle Komponenten außer den Polyolen und Isocyanaten vor dem Verschäumen zu einer Aktivatorlösung vermischt. Diese enthält dann u.a. die Stabilisatoren (Siloxane), die erfindungsgemäß verwendbaren Katalysatoren bzw. Katalysatorkombination, das Treibmittel, beispielsweise Wasser, sowie eventuell weitere Additive, wie Flammschutz, Farbe, Biozide etc, je nach Rezeptur des Polyurethanweichschaumstoffs.

Bei den Treibmitteln unterscheidet man zwischen chemischen und physikalischen Treibmittel. Zu den chemischen Treibmitteln gehört Wasser, dessen Reaktion mit den Isocyanatgruppen zur Bildung von CO₂ führt. Die Rohdichte des Schaumstoffes lässt sich durch die zugegebene Wassermenge steuern, wobei die bevorzugten Einsatzmengen an Wasser zwischen 0,5 und 7,5 Teilen, bezogen auf 100,0 Teile Polyol, liegen. Darüber hinaus können alternativ und/oder auch zusätzlich, physikalische Treibmittel, wie Kohlendioxid, Aceton, Kohlenwasserstoffe, wie n-, iso- oder Cyclopentan, Cyclohexan, halogenierte Kohlenwasserstoffe, wie Methylenchlorid, Tetrafluorethan, Pentafluorpropan, Heptafluorpropan, Pentafluorbutan, Hexafluorbutan und/oder Dichlormonofluorethan, eingesetzt werden. Die Menge des physikalischen Treibmittels liegt dabei vorzugsweise im Bereich zwischen 1 bis 20 Gew.-Teilen, insbesondere 1 bis 15 Gew.-Teilen, die Menge an Wasser vorzugsweise im Bereich zwischen 0,5 bis 10 Gew.-Teilen, insbesondere 1 bis 5 Gew.-Teilen. Kohlendioxid wird von den physikalischen Treibmitteln bevorzugt, welches bevorzugt in Kombination mit Wasser als chemischem Treibmittel verwendet wird.

Die Aktivatorlösung kann zusätzlich alle üblichen im Stand der Technik für Aktivatorlösungen bekannten Zusätze enthalten. Die Zusätze können ausgewählt sein aus der Gruppe umfassend Flammschutzmittel, UV-Stabilisatoren, Farbstoffe, Biozide, Pigmente, Zellöffner, Vernetzer und dergleichen.

Zur Herstellung eines Polyurethanweichschaumstoffs wird ein Gemisch aus Polyol, polyfunktionellem Isocyanat, Aminkatalysator, Kalium-, Zink- und/oder Zinn-organischer-Verbindung oder andere metallhaltige Katalysatoren, Stabilisator, Treibmittel, vorzugsweise Wasser zur Bildung von CO₂ und, falls nötig, Zusatz von physikalischen Treibmitteln, gegebenenfalls unter Zugabe von Flammschutzmitteln, UV-Stabilisatoren, Farbpasten, Bioziden, Füllstoffen, Vernetzern oder sonstigen üblichen Verarbeitungshilfsmitteln, umgesetzt.

Als Polyole eignen sich solche mit mindestens zwei gegenüber Isocyanatgruppen reaktiven H-Atomen; vorzugsweise werden Polyetherpolyole eingesetzt. Solche Polyole können nach bekannten Verfahren hergestellt werden, beispielsweise durch anionische Polymerisation von Alkylenoxiden in Gegenwart von Alkalihydroxiden oder Alkalialkoholaten als Katalysatoren und unter Zusatz mindestens eines Startermoleküls, dass 2 bis 3 reaktive Wasserstoffatome gebunden enthält oder durch kationische Polymerisation von Alkylenoxiden in Gegenwart von Lewis-Säuren wie beispielsweise Antimonpentachlorid oder Borfluorid-Etherat oder durch Doppelmetallcyanidkatalyse. Geeignete Alkylenoxide enthalten 2 bis 4 Kohlenstoffatome im Alkylenrest. Beispiele sind Tetrahydrofuran, 1,3- Propylenoxid, 1,2- bzw. 2,3- Butylenoxid; vorzugsweise werden Ethylenoxid und/oder 1,2-Propylenoxid eingesetzt. Die Alkylenoxide können einzeln, alternierend nacheinander oder als Mischungen verwendet werden. Als Startermolekül kommen Wasser oder 2- und 3-wertige Alkohole in Betracht, wie Ethylenglykol, Propandiol-1,2 und -1,3, Diethylenglykol, Dipropylenglykol, Glycerin, Trimethylolpropan usw. Auch polyfunktionelle Polyole wie z.B. Zucker können als Starter eingesetzt werden. Die Polyetherpolyole, vorzugsweise Polyoxypropylenpolyoxyethylen-polyole besitzen eine Funktionalität von 2 bis 8 und zahlengemittelte Molekulargewichte im Bereich von 500 bis 8000, vorzugsweise 800 bis 3500. Weitere Polyole sind dem Fachmann bekannt und können zum Beispiel der EP-A-0 380 993 oder US-A-3 346557 entnommen werden, auf die im vollen Umfang Bezug genommen wird.

Bevorzugt werden zur Herstellung von Form- und hochelastischen Weichschaumstoffen zwei- und/oder dreifunktionelle Polyetheralkohole eingesetzt, die primäre Hydroxylgruppen, bevorzugt über 50 %, aufweisen, insbesondere solche mit einem Ethylenoxidblock am Kettenende oder solche, die nur auf Ethylenoxid basieren.

Bevorzugt werden zur Herstellung von Blockweichschaumstoffen zwei- und/oder dreifunktionelle Polyetheralkohole eingesetzt, die sekundäre Hydroxylgruppen, bevorzugt über 90 %, aufweisen, insbesondere solche mit einem Propylenoxidblock oder statistischen Propylen- und Ethylenoxidblock am Kettenende oder solche, die nur auf Propylenoxidblöcken basieren.

Eine weitere Klasse von Polyolen stellen die sogenannten Füllkörperpolyole (Polymerpolyole) dar. Diese zeichnen sich dadurch aus, dass sie feste organische Füllstoffe bis zu einem Feststoffgehalt von 40% oder mehr in disperser Verteilung enthalten. Man verwendet unter anderem:

SAN-Polyole: Dies sind hochreaktive Polyole, welche ein Copolymer auf der Basis Styrol/Acrylnitril (SAN) dispergiert enthalten.

PHD-Polyole: Dies sind hochreaktive Polyole, welche Polyharnstoff ebenfalls in dispergierter Form enthalten.

PIPA-Polyole: Dies sind hochreaktive Polyole, welche ein Poly-urethan, beispielsweise durch in situ-Reaktion eines Isocyanats mit einem Alkanolamin in einem konventionellen Polyol gebildet, in dispergierter Form enthalten.

Der Festkörperanteil, der je nach Anwendung bevorzugt zwischen 5 und 40 Gew.-%, bezogen auf das Polyol liegt, ist für eine verbesserte Zellöffnung verantwortlich, so dass das Polyol insbesondere mit TDI kontrolliert verschäumbar wird und kein Schrumpfen der Schäume auftritt. Der Festkörper wirkt damit als wesentliche Prozesshilfe. Eine weitere Funktion besteht darin, über den Feststoffanteil die Härte zu kontrollieren, denn höhere Festkörperanteile bewirken eine höhere Härte des Schaums.

Die Formulierungen mit feststoffhaltigen Polyolen sind deutlich weniger eigenstabil und bedürfen daher neben der chemischen Stabilisierung durch die Vernetzungsreaktion eher auch zusätzlich einer physikalischen Stabilisierung.

Je nach Feststoffgehalt der Polyole werden diese alleine oder in Abmischung mit den oben genannten ungefüllten Polyolen eingesetzt.

Als Isocyanate können organische Isocyanatverbindungen verwendet werden, die mindestens zwei Isocyanat-Gruppen enthalten. Generell kommen die an sich bekannten aliphatischen, cycloaliphatischen, araliphatischen und vorzugsweise aromatischen mehrwertigen Isocyanate in Frage. Besonders bevorzugt werden Isocyanate in einem Bereich von 60 bis 140 mol % relativ zu der Summe der isocyanatverbrauchenden Komponenten eingesetzt.

Im einzelnen seien beispielhaft genannt: Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4 und vorzugsweise Hexamethylendiisocyanat-1,6, cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie beispielsweise 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Es ist auch möglich, Isocyanate einzusetzen, die durch den Einbau von Urethan-, Uretdion-, Isocyanurat-, Allophanat und anderen Gruppen modifiziert wurden, sogenannte modifizierte Isocyanate.

Besonders bewährt haben sich als organische Polyisocyanate und kommen daher vorzugsweise zur Anwendung:
Toluylendiisocyanat, Gemische aus Diphenylmethandiisocyanat-Isomeren, Gemische aus Diphenylmethandiisocyanat und Polyphenylpolymethylpolyisocyanat oder Toluoldiisocyanat mit Diphenylmethandiisocyanat und/oder Polyphenylpolymethylpolyisocyanat oder so genannte Prepolymere.

Es können TDI (2,4- und 2,6-Toluylendiisocyanat-Isomerengemisch) als auch MDI (4,4'-Diphenylmethandiisocyanat) verwendet werden. Das sogenannte "crude MDI" oder "polymere MDI" enthält neben dem 4,4'- auch die 2,4'- und 2,2'-Isomeren sowie höherkernige Produkte. Als "pure MDI" bezeichnet man zweikernige Produkte aus überwiegend 2,4'- und 4,4'-Isomerengemischen bzw. deren Prepolymere. Weitere geeignete Isocyanate sind in den Patentschriften DE 444898 und EP 1095968 aufgeführt, auf die hier im vollen Umfang Bezug genommen wird.

Stabilisatoren umfassen bevorzugt Schaumstabilisatoren auf der Basis von Polydialkylsiloxan-Polyoxyalkylen-copolymeren, wie sie allgemein zur Herstellung von Urethanschaumstoffen mitverwendet werden. Diese Verbindungen sind im allgemeinen so aufgebaut, dass z. B. ein langkettiges Copolymerisat aus Ethylen- und Propylenoxid mit einem Polydimethylsiloxanrest verbunden ist. Die Verknüpfung zwischen dem Polydialkylsiloxan und dem Polyetherteil kann dabei über eine SiC-Verknüpfung oder eine Si-O-C-Bindung erfolgen. Strukturell kann der oder können die unterschiedlichen Polyether terminal oder seitenständig an das Polydialkylsiloxan gebunden sein. Der Alkylrest oder die verschiedenen Alkylreste können dabei aliphatisch, cycloaliphatisch oder aromatisch sein. Ganz besonders vorteilhaft sind dabei Methylgruppen. Das Polydialkylsiloxan kann dabei linear sein oder auch Verzweigungen enthalten. Weitere Schaumstabilisatoren sind in US-A-2,834,748; 2 917 480 sowie in US-A-3,629,308 beschrieben.

Als Vernetzer werden niedermolekulare, gegenüber Isocyanaten reaktive mehrfunktionelle Verbindungen bezeichnet. Geeignet sind Hydroxyl- oder Amin-terminierte Substanzen, wie Glycerin, Triethanolamin (TEOA), Diethanolamin (DEOA) und Trimethylolpropan. Die Einsatzkonzentration liegt üblicherweise zwischen 0,5 und 5 Teilen, bezogen auf 100,0 Teile Polyol je nach Formulierung, kann aber auch davon abweichen. Bei Verwendung von crude MDI bei der Formverschäumung übernimmt dies ebenfalls eine vernetzende Funktion. Der Gehalt an niedermolekularen Vernetzern kann daher bei steigender Menge an crude MDI entsprechend reduziert werden.

Die erfindungsgemäßen Formulierungen können sowohl in der Block- als auch in der Formverschäumung verwendet werden. Es können alle dem Fachmann bekannten Verfahren zur Herstellung von Polyurethanweichschaumstoffen verwendet werden. So kann zum Beispiel der Schäumungsprozess sowohl in horizontaler als auch in vertikaler Richtung in diskontinuierlichen oder kontinuierlichen Anlagen erfolgen. Ebenso können die erfindungsgemäßen Stabilisatorformulierungen für die CO₂-Technologie benutzt werden. Die Verwendung in Niederdruck- und Hochdruckmaschinen ist möglich, wobei die erfindungsgemäßen Formulierungen sowohl direkt in die Mischkammer dosiert werden können oder auch schon vor der Mischkammer einer der danach in die Mischkammer gelangenden Komponenten zugemischt werden. Die Zumischung kann auch im Rohstofftank erfolgen.

Ein weiterer Gegenstand der vorliegenden Erfindung betrifft einen Polyurethanweichschaumstoff hergestellt unter erfindungsgemäßer Verwendung des Aminkatalysators oder der Katalysatorkombination.

Durch die erfindungsgemäße Verwendung des Katalysators / der Katalysatorkombination bei der Reaktion von Polyolen mit Isocyanaten kann ein Polyurethanweichschaum, insbesondere offenzelliger Polyurethanweichschaum, mit erhöhter Rekatalysestabilität erhalten werden.

Wie bereits vorstehend beschrieben können der Reaktionsmischung zur Herstellung des erfindungsgemäßen Polyurethanweichschaums übliche Additive zugesetzt werden.

Erfindungsgemäß kann es bevorzugt sein, dass der Polyurethanweichschaum frei von Methyl-substituierten Aminen ist.

Der erfindungsgemäße Polyurethanweichschaum kann eine DMF-Emission von ≥ 0 µg/m³ und ≤ 5 µg/m³, vorzugsweise ≤ 1µg/m³ und besonders bevorzugt ≤ 0.1µg/m³ aufweisen, ermittelt nach dem Prüfkammerverfahren DIN 13419-1, 24 Stunden nach Prüfkammerbeladung.

Der erfindungsgemäße Polyurethanweichschaum kann vorzugsweise frei von Dimethylformamid sein. Mittels der erfindungsgemäßen Verwendung des Aminkatalysators oder der Katalysatorkombination lässt sich die Emission an DMF im Polyurethanweichschaum deutlich reduzieren. Die ggf. noch detektierbaren Restmengen an DMF lassen sich auf Verunreinigungen zurückführen, die sich bei der industriellen Produktion der erfindungsgemäß verwendbaren Aminkatalysatoren ohne unzumutbaren Aufwand nicht entfernen lassen.

Erfindungsgemäß hergestellter Polyurethanweichschaum ist nach Temperaturbehandlung von 2 h bei 180°C rekatalysestabil und weist eine Zugfestigkeit [kPa] von ≥ 75 auf.

Verwendet man beispielsweise Diethylaminoethoxyethanol anstelle von Dimethylaminoethoxyethanol zur Herstellung von Polyurethanweichschäumen, so zeichnen sich die resultierenden Schäume durch eine deutlich verbesserte Alterungsbeständigkeit aus. Während bei der Verwendung von Dimethylaminoethoxyethanol der Polyurethanweichschaum nach einer einstündigen Temperierung bei 180°C völlig zerstört ist, weist der Polyurethanweichschaum mit Diethylaminoethoxyethanol keine Veränderung auf.

Der entscheidende Vorteil des Diethylaminoethoxyethanols gegenüber dem Dimethylaminoethoxyethanol besteht somit darin, dass es sich hierbei um ein einbaubares emissionsarmes Amin handelt, welches eine vergleichbare katalytische Aktivität in Bezug auf die Poly-urethan-Bildung aufweist, die Rekatalyse jedoch nicht begünstigt.

Noch ein Gegenstand der vorliegenden Erfindung betrifft ein Erzeugnis enthaltend einen erfindungsgemäßen Polyurethanweichschaum.

Der Gegenstand der vorliegenden Erfindung wird anhand von Beispielen weiter erläutert.

### Herstellung der Polyurethanweichschäume

Bei der Verschäumung wurden 300 g Polyol eingesetzt; die anderen Formulierungsbestandteile wurden entsprechend umgerechnet. Dabei bedeutete beispielsweise 1,0 Teil einer Komponente 1 g dieser Substanz je 100 g Polyol.

Zur Verschäumung wurden das Polyol, Wasser, Katalysatorkombination (= erfindungsgemäß beanspruchter Amin-Katalysator und organische Zinnverbindung) und Siliconstabilisator unter Rühren gut vermischt. Nach Zugabe des Isocyanats wurde mit einem Rührer 7 Sek. bei 3000 U/Min. gerührt und das Gemisch in einem mit Papier ausgekleideten Holzkasten (Grundfläche 27 cm x 27 cm) gegossen. Es entstand ein Schaumstoff, der den nachfolgend beschriebenen anwendungstechnischen Tests unterzogen wurde.

### Anwendungstechnische Tests

Physikalische Eigenschaften der Polyurethanweichschäume
Die hergestellten Polyurethanweichschäume wurden anhand folgender physikalischer Eigenschaften beurteilt:
a) Rücksacken des Schaumstoffes nach dem Ende der Steigphase (=Rückfall).
b) Raumgewicht (RG)
c) Die Luftdurchlässigkeit des Schaums wurde durch eine Staudruckmessung am Schaumstoff ermittelt. Der gemessene Staudruck wurde in mm Wassersäule angegeben, wobei dann die niedrigeren Staudruckwerte den offeneren Schaum charakterisieren. Die Werte wurden im Bereich von 0 bis 300 mm gemessen.
d) Stauchhärte CLD, 40%
e) Druckverformungstest bei Kompression um 90% für 22h bei 70°C
f) Rückprallelastizität (Ball rebound test)
g) Stabilität nach Temperierung bei 180°C
h) Zugfestigkeit
i) Bruchdehnung

### Messung der Emissionen

Messung des VOC-Gehaltes nach der Daimler-Chrysler-Prüfvorschrift
Die Emission wurde in Anlehnung an die Daimler-Chrysler-Prüfvorschrift PB VWT 709 bestimmt. Im Folgenden wird die Durchführung der Thermodesorption mit anschließender Gaschromatographie/Massenspektrometrie-Kopplung (GC/MS) beschrieben.
a) Messtechnik: Die Thermodesorption wurde mit einem Thermodesorber "TDS2" mit Probenwechsler der Fa. Gerstel, Mülheim, in Verbindung mit einem Hewlett Packard HP6890/HP5973 GC/MSD-System durchgeführt.
b) Messbedingungen:

| Thermodesorption | Gerstel TDS2 |
|---|---|
| Desorptionstemperatur | 90°C |
| Desorptionsdauer | 30 min |
| Fluß | 60 ml/min |
| Transferline | 280°C |
| Kryofokussierung | HP 6890 PTV |
| Liner | Glasverdampferrohr mit silanisierter Glaswolle |
| Temperatur | -150°C |
| GC | Kapillar-GC HP 6890 |
| Injektor | PTV Split 1:50 |
| Temperaturprogramm | -150°C; 3 min; 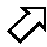 12°C/s; 280°C |
| Säule | Agilent 19091B-115, Ultra 2, 50 m * 0,32 mm dF 0,5µm |
| Fluß | 1 ml/min const. Flow |
| Temperaturprogramm | 50°C; 5 min; 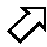 3°C/min; 92°C; 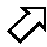 5°C/min; 160°C; 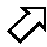 10°C/min; 280°C, 20 min |
| Detektor | HP MSD 5973 |
| Modus | |
| Auswertung | Auswertung des Totalionenstrom-Chromatrogramms durch Berechnung als Toluoläquivalent |

c) Kalibration
Zur Kalibration wurde 1µl eines Gemisches aus Toluol und Hexadecan in Pentan (je 0,6mg/ml) auf ein gereinigtes, mit Tenax®TA (mesh35/60) gefülltes Adsorptionsröhrchen gegeben und vermessen (Desorption 5 min; 280°C).
d) Probenvorbereitung
10 mg Schaumstoff wurden in drei Teilproben in ein Thermodesorptionsröhrchen gesteckt. Dabei wurde darauf geachtet, dass der Schaum nicht komprimiert wird.

Bestimmung der Dimethylformamid-Emission nach dem so genannten Prüfkammertest:
Von den erhaltenen Schäumen wurde die DMF-Emission bei Raumtemperatur in Anlehnung an die DIN-Vorschrift DIN 13419-1 bestimmt. Die Probenentnahme erfolgte nach 24 Stunden. Hierzu wurden 2 Liter der Prüfkammeratmosphäre mit einer Flussrate von 100 ml /min über ein mit Tenax®TA (mesh35/60) gefülltes Adsorptionsröhrchen gegeben. Im Folgenden wird die Durchführung der Thermodesorption mit anschließender Gaschromatographie/Massenspektrometrie-Kopplung (GC/MS) beschrieben.

Bei Tenax®TA handelt es sich um ein poröses Polymerharz basierend auf 2.6-Diphenylenoxid, erhältlich beispielsweise bei der Firma Scientific Instrument Services, 1027 Old York Rd., Ringoes, NJ 08551.
e) Messtechnik
Die Thermodesorption wurde mit einem Thermodesorber "TDS2" mit Probenwechsler der Fa. Gerstel, Mülheim, in Verbindung mit einem Hewlett Packard HP6890/HP5973 GC/MSD-System durchgeführt.
f) Messbedingungen:

| | |
|---|---|
| Thermodesorption | Gerstel TDS2 |
| Desorptionstemperatur | 280°C |
| Desorptionsdauer | 5 min |
| Fluß | 60 ml/min |
| Transferline | 280°C |
| Kryofokussierung | HP 6890 PTV |
| Liner | Glasverdampferrohr mit silanisierter Glaswolle |
| Temperatur | -150°C |
| | |
| | |
| GC | Kapillar-GC HP 6890 |
| Temperaturprogramm | -150°C; 3 min; 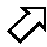 12°C/s; 280°C |
| Säule | Agilent 19091B-115, Ultra 2, 50 m * 0,32 mm dF 0,5µm |
| Fluß | 1 ml/min const. Flow |
| Temperaturprogramm | 50°C; 5 min; 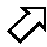 3°C/min; 92°C; 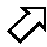 5°C/min; 160°C; 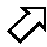 10°C/min; 280°C, 20 min |
| Detektor | HP MSD 5973 |
| Auswertung | Auswertung des Totalionenstrom-Chromatrogramms durch Berechnung als Toluoläquivalent |

g) Kalibration
Zur Kalibration wurde 1µl eines Gemisches aus Toluol und Hexadecan in Pentan (je 0,6mg/ml) auf ein gereinigtes, mit Tenax®TA (mesh35/60) gefülltes Adsorptionsröhrchen gegeben und vermessen (Desorption 5 min; 280°C).

### Verschäumungsergebnisse - Rekatalyse

In einer Rezeptur basierend auf 4,0 Teilen Wasser wurde das Verhalten von Dimethylaminoethoxyethanol (TEGOAMIN® DMEE, erhältlich bei der Firma Evonik Goldschmidt GmbH) und Diethylaminoethoxyethanol miteinander verglichen. Das Amin Triethylendiamin, 33%ige Lösung in Dipropylenglykol, (TEGOAMIN® 33, erhältlich bei der Firma Evonik Goldschmidt GmbH) dient als Referenz. Für dieses Amin ist bekannt, dass es die Rekatalyse nicht begünstigt.

### Beispiel 1:

| Rezeptur | |
|---|---|
| 100 | Teile Polyol^{*1} |
| 4,0 | Teile Wasser |
| 1,0 | Teile Schaumstabilisator^{*2} TEGOSTAB®BF2370 (Evonik Goldschmidt GmbH) |
| 0,2 | Teile Katalysator^{*3} (Evonik Goldschmidt GmbH) |
| 48,3 | Teile Isocyanat (Toluylendiisocyanat T80) (80% 2,4-Isomer, 20% 2,6-Isomer) |

| | |
|---|---|
| ^{*1} = Voranol® CP 3322, erhältlich bei der Firma Dow Chemical, hierbei handelt es sich um ein Polyethertriol mit der OH-Zahl 47. ^{*2} = TEGOSTAB®BF2370, erhältlich bei der Firma Evonik Goldschmidt GmbH, hierbei handelt es sich um Polysiloxan-Polyoxyalkylen-Blockcopolymer zur Verwendung als Schaumstabilisator bei der Herstellung von flexiblen Polyurethanblock- und -formschäumen. ³ = KOSMOS®29, erhältlich bei der Firma Evonik Goldschmidt GmbH, hierbei handelt es sich um das Zinn-II-Salz der Ethylhexansäure. | |

Die folgende Tabelle gibt die Art des Amins und das Verschäumungsergebnis wieder.

| Aminkatalysator | Steigzeit [s] | Raumgewicht [kg/m³ ] | Porosität* | Stauchhärte CLD40 Kompression [kPa] | Zugfestigkeit [kPa] |
|---|---|---|---|---|---|
| 0,15 Teile TEGOAMIN® 33 | 89 | 25,3 | 8 | 3,5 | 121 |
| **0,15 Teile (1,13 mmol)** TEGOAMIN® DMEE | 88 | 25,4 | 8 | 3,6 | 107 |
| 0,182 Teile (1,13 mmol) Diethylaminoethoxye thanol | 95 | 25,4 | 9 | 3,6 | 116 |

| | | | | | |
|---|---|---|---|---|---|
| * = (Staudruck in mm Wassersäule) | | | | | |

| Aminkatalysator | Bruchdehnung [%] | Druckverformungstest 90%, 22 Std., 70°C [%] | Rückprallelastizität [%] | Schaumbeschaffenheit nach 1h bei 180°C |
|---|---|---|---|---|
| 0,15 Teile TEGOAMIN® 33 | 199 | -5 | 47 | In Ordnung |
| 0,15 Teile (1,13 mmol) TEGOAMIN® DMEE | 150 | -6 | 47 | zerstört |
| 0,182 Teile (1,13 mmol) Diethylaminoethoxyet hanol | 171 | -6 | 47 | In Ordnung |

Der entscheidende Vorteil des Amins Diethylaminoethoxyethanol gegenüber TEGOAMIN® DMEE besteht nun darin, dass es die Rekatalyse nicht begünstigt.

### Beispiel 2:

### Verschäumungsergebnisse - Emission

Um den Einfluss der Aminkatalysatoren Diethylaminoethoxyethanol und Dimethylaminoethoxyethanol auf die Schaumemission zu untersuchen, wurde eine Rezeptur ausgewählt, die eine erfindungsgemäße Katalysatorkombination sowie ein emissionsarmes Polyol enthält.

| Rezeptur | |
|---|---|
| 100 | Teile Polyol^{*4} |
| 4,0 | Teile Wasser |
| 1,0 | Teile Schaumstabilisator^{*2} (TEGOSTAB®BF2370^{*2}) |
| 0,54 | Katalysator^{*5} (KOSMOS®EF^{*5}) |
| 48,3 | Teile Isocyanat (Toluylendiisocyanat T80) (80% 2,4-Isomer, 20% 2,6-Isomer) |
| 0,15 bzw. 0,182 | Teile TEGOAMIN® DMEE Teile Diethylaminoethoxyethanol |

| | |
|---|---|
| ^{*4} = Arcol 11055®, erhältlich bei der Firma Bayer AG, hierbei handelt es sich um ein emissionsarmes Polyethertriol ^{*5} = KOSMOS®EF, erhältlich bei der Firma Evonik Goldschmidt GmbH, hierbei handelt es sich um Zinnricinoleat | |

Das Emissionsverhalten der zuvor beschriebenen Schäume wurde entsprechend der Daimler-Chrysler-Prüfanweisung BP VWT 709 VOC-Bestimmung (30 Min. bei 90°C) untersucht.

Dabei wurden folgende Ergebnisse erhalten:

| Aminkatalysator | VOC-Gehalt | |
|---|---|---|
| | Amin-Emission | Gesamtemission |
| Dimethylaminoethoxyethanol | < 1µg/g | 10µg/g |
| Diethylaminoethoxyethanol | < 1µg/g | 10µg/g |

### Beispiel 3

Verschäumungsergebnisse - DMF-Emission

Um den Einfluss der Aminkatalysatoren Diethylaminoethoxyethanol und Dimethylaminoethoxyethanol auf die DMF-Schaumemission zu untersuchen, wurde eine Rezeptur ausgewählt, die eine erfindungsgemäße Katalysatorkombination sowie ein emissionsarmes Polyol enthält.

| Rezeptur | |
|---|---|
| 100 | Teile Polyol^{*4} |
| 2,5 | Teile Wasser |
| 0,8 | Teile Schaumstabilisator^{*2} (TEGOSTAB®BF2370^{*2}) |
| 0,42 | Katalysator^{*5} (KOSMOS®EF^{*5}) |
| 34,0 | Teile Isocyanat (Toluylendiisocyanat T80) (80% 2,4-Isomer, 20% 2,6-Isomer) |
| 0,50 bzw. 0, 61 | Teile (TEGOAMIN® DMEE) Teile Diethylaminoethoxyethanol |

| | |
|---|---|
| ^{*4} = Arcol 11055®, erhältlich bei der Firma Bayer AG, hierbei handelt es sich um ein emissionsarmes Polyethertriol ^{*5} = KOSMOS®EF, erhältlich bei der Firma Evonik Goldschmidt GmbH, hierbei handelt es sich um Zinnricinoleat | |

Die DMF- Emission der zuvor beschriebenen Schäume wurde entsprechend dem Prüfkammerverfahren in Anlehnung an die DIN 13419-1 untersucht.
Die Probenentnahme erfolgte nach 24 Stunden, es wurden folgende Ergebnisse erhalten:

DMF-Emission nach dem Prüfkammertest:

| Aminkatalysator | DMF-Emission, 24 h nach Prüfkammerbeladung |
|---|---|
| Dimethylaminoethoxyethanol | 7 µg/m³ |
| Diethylaminoethoxyethanol | < 0.1µg/m³ |

### Beispiel 4

In einer Rezeptur basierend auf 4,0 Teilen Wasser wurde das Verhalten von Dimethylaminoethoxyethanol (TEGOAMIN® DMEE, erhältlich bei der Firma Evonik Goldschmidt GmbH) und Diethylaminoethoxyethanol miteinander verglichen. Das Amin TEGOAMIN® 33 (erhältlich bei der Firma Evonik Goldschmidt GmbH) dient als Referenz. Für dieses Amin ist bekannt, dass es die Rekatalyse nicht begünstigt.

| Rezeptur | |
|---|---|
| 100 | Teile Polyol^{*1}, Voranol® CP 3322 (Dow Chemical) |
| 4,0 | Teile Wasser |
| 1,0 | Teile Schaumstabilisator^{*2} TEGOSTAB®BF2370 (Evonik Goldschmidt GmbH) |
| 0,2 bzw. 0,54 | Teile KOSMOS® 29^{*3} (Evonik Goldschmidt GmbH) bzw. Teile KOSMOS® EF^{*5} |
| 48,3 | Teile Isocyanat (Toluylendiisocyanat T80) (80% 2,4-Isomer, 20% 2,6-Isomer) |

Um den Effekt der Rekatalyse zu untersuchen, werden die Schäume nach ihrer Herstellung zum einen ohne jegliche Nachbehandlung und zum anderen nach einer Temperierung bei 180°C für 30 Minuten, 60 Minuten und 120 Minuten untersucht. Die folgenden Tabellen geben die Art des Amins und die Verschäumungsergebnisse wieder.

| Katalysatoren | Steigzeit [s] | Raumgewicht [kg/m3] | Porosität* | CLD, 40% Kompression [kPa] | | | |
|---|---|---|---|---|---|---|---|
| | | | | RT | nach 30 min bei 180°C | nach 1 h bei 180°C | nach 2 h bei 180°C |
| 0,15 Teile TEGOAMIN® 33 0,20 Teile KOSMOS® 29^{*3} | 93 | 25,1 | 10 | 3,2 | 2,7 | 2,7 | 2,5 |
| 0,15 Teile (1,13 mmol) TEGOAMIN® DMEE 0,20 Teile KOSMOS® 29^{*3} | 96 | 25,0 | 7 | 3,2 | 2,1 | 0,4 | 0,3 |
| 0,182 Teile (1,13 mmol) Diethylaminoethoxyethanol 0,20 Teile KOSMOS® 29^{*3} | 98 | 25,2 | 9 | 3,5 | 2,9 | 2,2 | 1,7 |
| 0,15 Teile (1,13 mmol) TEGOAMIN® DMEE 0,54 Teile KOSMOS® EF^{*5} | 86 | 24,6 | 8 | 3,2 | 1,9 | 0,5 | 0,5 |
| 0,182 Teile (1,13 mmol) Diethylaminoethoxyethanol 0,54 Teile KOSMOS® EF^{*5} | 86 | 24,5 | 8 | 3,2 | 2,7 | 2,0 | 1,5 |

| | | | | | | | |
|---|---|---|---|---|---|---|---|
| RT = Raumtemperatur 23°C ohne Temperierung. * = (Staudruck in mm Wassersäule) | | | | | | | |

| Katalysatoren | Druckverformungstest 22 Std, 90% Kompression, 70°C [%] | | | |
|---|---|---|---|---|
| | ohne Temperierung | nach 30 min bei 180°C | nach 1 Std. bei 180°C | nach 2 Std. bei 180°C |
| 0,15 Teile TEGOAMIN® 33 0,20 Teile KOSMOS® 29^{*3} | -6 | -7 | -7 | -10 |
| 0,15 Teile (1,13 mmol) TEGOAMIN® DMEE 0,20 Teile KOSMOS® 29^{*3} | -6 | -9 | -67 | -82 |
| 0,182 Teile (1,13 mmol) Diethylaminoethoxyethanol 0,20 Teile KOSMOS® 29^{*3} | -6 | -8 | -8 | -12 |
| 0,15 Teile (1,13 mmol) TEGOAMIN® DMEE 0,54 Teile KOSMOS® EF^{*5} | -6 | -10 | -66 | -84 |
| 0,182 Teile (1,13 mmol) Diethylaminoethoxyethanol 0,54 Teile KOSMOS® EF^{*5} | -8 | -8 | -9 | -10 |

| Katalysatoren | Zugfestigkeit [kPa] | | | |
|---|---|---|---|---|
| | ohne Temperierung | nach 30 min bei 180°C | nach 1 Std. bei 180°C | nach 2 Std. bei 180°C |
| 0,15 Teile TEGOAMIN® 33 0,20 Teile KOSMOS® 29^{*3} | 105 | 113 | 110 | 104 |
| 0,15 Teile (1,13 mmol) TEGOAMIN® DMEE 0,20 Teile KOSMOS® 29^{*3} | 94 | 76 | 14 | 15 |
| 0,182 Teile (1,13 mmol) Diethylaminoethoxyethanol 0,20 Teile KOSMOS® 29^{*3} | 91 | 118 | 104 | 78 |
| 0,15 Teile (1,13 mmol) TEGOAMIN® DMEE 0,54 Teile KOSMOS® EF^{*5} | 94 | 59 | 24 | 19 |
| 0,182 Teile (1,13 mmol) Diethylaminoethoxyethanol 0,54 Teile KOSMOS® EF^{*5} | 98 | 105 | 104 | 84 |

| Katalysatoren | Bruchdehnung [%] | | | |
|---|---|---|---|---|
| | ohne Temperierung | nach 30 min bei 180°C | nach 1 Std. bei 180°C | nach 2 Std. bei 180°C |
| 0,15 Teile TEGOAMIN® 33 0,20 Teile KOSMOS® 29^{*3} | 181 | 219 | 240 | 249 |
| 0,15 Teile (1,13 mmol) TEGOAMIN® DMEE 0,20 Teile KOSMOS® 29^{*3} | 150 | 199 | 13 | 15 |
| 0,182 Teile (1,13 mmol) Diethylaminoethoxyethanol 0,20 Teile KOSMOS® 29^{*3} | 130 | 179 | 233 | 164 |
| 0,15 Teile (1,13 mmol) TEGOAMIN® DMEE 0,54 Teile KOSMOS® EF^{*5} | 171 | 141 | 66 | 14 |
| 0,182 Teile (1,13 mmol) Diethylaminoethoxyethanol 0,54 Teile KOSMOS® EF^{*5} | 168 | 227 | 224 | 195 |

| Katalysatoren | Rückprallelastizität [%] | | | |
|---|---|---|---|---|
| | ohne Temperierung | nach 30 min bei 180°C | nach 1 Std. bei 180°C | nach 2 Std. bei 180°C |
| 0,15 Teile TEGOAMIN® 33 0,20 Teile KOSMOS® 29^{*3} | 46 | 47 | 46 | 45 |
| 0,15 Teile (1,13 mmol) TEGOAMIN® DMEE 0,20 Teile KOSMOS® 29^{*3} | 46 | 42 | 16 | 5 |
| 0,182 Teile (1,13 mmol) Diethylaminoethoxyethanol 0,20 Teile KOSMOS® 29^{*3} | 46 | 46 | 42 | 38 |
| 0,15 Teile (1,13 mmol) TEGOAMIN® DMEE 0,54 Teile KOSMOS® EF^{*5} | 46 | 40 | 10 | 0 |
| 0,182 Teile (1,13 mmol) Diethylaminoethoxyethanol 0,54 Teile KOSMOS® EF^{*5} | 46 | 45 | 42 | 30 |

Der wesentliche Vorteil des Amins Diethylaminoethoxyethanol gegenüber TEGOAMIN® DMEE besteht nun darin, dass es die Rekatalyse nahezu nicht begünstigt. So weisen die Schäume mit Diethylaminoethoxyethanol auch nach einer einstündigen Temperierung bei 180°C physikalische Eigenschaften auf, die mit denen des unbehandelten Schaums vergleichbar sind. Ebenso weisen für DMEE die anderen physikalischen Eigenschaften wie Zugfestigkeit, Bruchdehnung, Rückprallelastizität sowie Druckverformung bereits nach einer Stunde Temperierung bei 180°C

### Beispiel 5

### Brennverhalten

In einer Rezeptur basierend auf 4,0 Teilen Wasser wurde der Einfluß auf das Brennverhalten der PU-Schäume von Dimethylethanolamin (TEGOAMIN® DMEA) und Diethylethanolamin (DEEA) miteinander verglichen.

| Rezeptur | |
|---|---|
| 100 | Teile Polyol, Voranol® CP 3322^{*1} (Dow Chemical) |
| 4,0 | Teile Wasser |
| 0,8 | Teile Schaumstabilisator TEGOSTAB®B8239^{*6} (Evonik Goldschmidt GmbH) |
| 0,2 | Teile KOSMOS® 29^{*3} (Evonik Goldschmidt GmbH) |
| 50,6 | Teile Isocyanat (Toluylendiisocyanat T80) (80% 2,4-Isomer, 20% 2,6-Isomer) |

| | |
|---|---|
| ^{*6} = TEGOSTAB®B8239, erhältlich bei der Firma Evonik Goldschmidt GmbH hierbei handelt es sich um ein Polyethersiloxan | |

Um das Brennverhalten zu untersuchen, werden die Schäume nach ihrer Herstellung dem Brenntest UL94 unterzogen. Die folgende Tabelle gibt die Art des Amins und die Brennergebnisse wieder.

| Katalysatoren | Steigzeit [s] | Raumgewicht [kg/m³] | Porosität^{*} | Brennverhalten UL94 Brennrate [mm/min] |
|---|---|---|---|---|
| 0,1 Teile DMEA 8,0 Teile Fyrol A-300 TB^{*7} | 114 | 25,2 | 16 | 85 |
| 0,1 Teile DMEA 10,0 Teile Fyrol A-300 TB^{*7} | 117 | 25,7 | 14 | 88 |
| 0,1315 Teile DEEA 8,0 Teile Fyrol A-300 TB^{*7} | 117 | 25,2 | 22 | 75 |
| 0,1315 Teile DEEA 10,0 Teile Fyrol A-300 TB^{*7} | 121 | 25,6 | 21 | 84 |

| | | | | |
|---|---|---|---|---|
| ^{* =} (Staudruck in mm Wassersäule) ^{*7} = Fyrol A-300 TB, erhältlich bei der Firma Akzo Nobel Chemicals GmbH, hierbei handelt es sich um eine Mischung aus Phosphatester mit Tris(1,3-dichlorisopropyl)phosphat CAS-Nummer 13674-87-8; EG-Nummer 237-159-2 | | | | |

Der Prüfkörper wird in horizontaler Lage fixiert und für 15 s mit einem Bunsenbrenner beflammt.

Unter Verwendung der 4,0 Teile Wasserrezeptur konnte gezeigt werden, im Vergleich DEEA zu TEGOAMIN® DMEA, dass die resultierenden Schäume unter Verwendung von DEEA (Diethylethanolamin) ein verbessertes Brennverhalten aufweisen.

## Patentansprüche

1. Verwendung wenigstens eines reaktiven Aminkatalysators in wässrigen oder organischen Lösungen zur Herstellung von Polyurethanweichschaumstoffen, insbesondere offenzelligen Polyurethanweichschaumstoffen, mit erhöhter Rekatalysestabilität, **dadurch gekennzeichnet, dass** der Aminkatalysator die nachstehende Formel aufweist:
Z-R-Y (1)
R = Polyetherrest der Formel (2)
-(R¹-O)ₙ-R²- (2)
mit der Maßgabe, dass n = 0-6
oder ein Amin der Formel (3) oder (4) 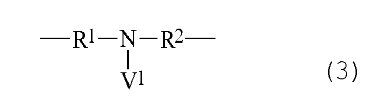 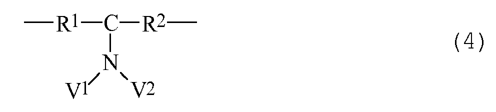 oder ein Amid der Formel (5) oder (6) 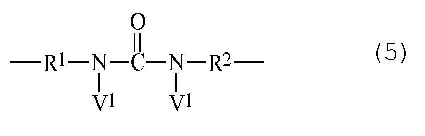 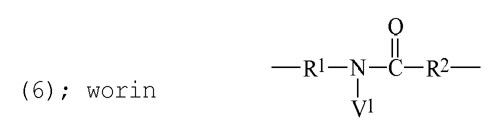 R¹, R² = gleich oder ungleich voneinander, ein linearer, verzweigter oder cyclischer, aliphatischer oder aromatischer, gesättigter oder ungesättigter, gegebenenfalls mit einem Heteroatom substituierter, Kohlenwasserstoffrest mit C₂ bis C₁₀ Kohlenstoffatomen ist,
V¹, V² = -(R¹-O)ₘ-R³ (7)
mit der Maßgabe, dass m = 0 bis 15 ist, und
R³, R⁴= gleich oder unabhängig voneinander H oder R¹; Y = H, OH, R, R¹ oder ein Aminrest der Formel (8), (9), (10), (11) oder (12) 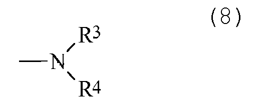 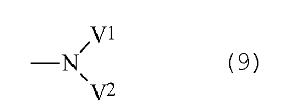 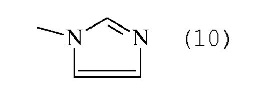 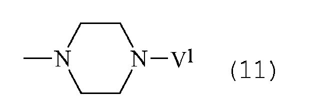 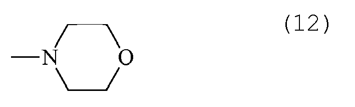 Z = Aminrest der vorstehenden Formeln (8), (9), (10), (11), (12) oder ein Amidrest der nachstehenden Formel (13) ist, 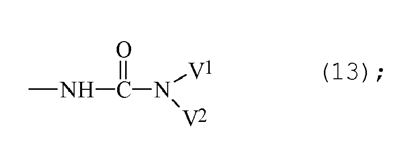 wobei die im Schaum verbleibenden Amine mindestens eine H-acide Gruppierung und/oder ein Molekulargewicht von ≥ 200 g/mol und ≤ 5000 g/mol aufweisen.

2. Verwendung eines reaktiven Aminkatalysators nach Anspruch 1, wobei der Aminkatalysator die nachstehende Formel aufweist:
R³R⁴N-(R¹-O)ₙR²-Y
worin
R¹, R²= ist gleich oder ungleich voneinander ein linearer, ein verzweigter, ein cyclischer, oder ein aromatischer Alkylenrest mit C₂ bis C₈-Kohlenstoffatomen;
R³, R⁴= ist gleich oder ungleich voneinander ein linearer, ein verzweigter, ein cyclischer, oder ein aromatischer Kohlenwasserstoffrest mit C₂ bis C₈-Kohlenstoffatomen;
n = eine ganze Zahl von 0 - 6, vorzugsweise 1 - 4;
Y = -OH oder -NH₂.

3. Verwendung eines reaktiven Aminkatalysators nach Anspruch 1, wobei der Aminkatalysator die nachstehende Formel aufweist:
R³R⁴N- (R¹-O)ₙR²-Y
worin
R¹, R² = ist gleich oder ungleich voneinander ein linearer Alkylenrest mit C₂-, C₃- oder C₄-Kohlenstoffatomen;
R³, R⁴= ist gleich oder ungleich voneinander ein linearer Kohlenwasserstoffrest mit C₂-, C₃- oder C₄-Kohlenstoffatomen;
n = 0,1, 2 oder 3, vorzugsweise 1 oder 2;
Y = -OH oder -NH₂.

4. Verwendung eines reaktiven Aminkatalysators nach Anspruch 1, wobei der Aminkatalysator Diethylaminoethoxyethanol und/oder Diethylethanolamin, wobei Diethylaminoethoxyethanol am meisten bevorzugt ist, umfasst.

5. Katalysatorkombination zur Herstellung von Polyurethanweichschaumstoffen, insbesondere offenzelligen Polyurethanweichschaumstoffen, mit erhöhter Rekatalysestabilität, **dadurch gekennzeichnet, dass** die Katalysatorkombination wenigstens einen Aminkatalysator nach einem der Ansprüche 1 bis 4 und
- wenigstens eine Kalium-, Zink- und/oder Zinn-organische-Verbindung; und/oder
- wenigstens ein tertiäres Amin ausgewählt aus der Gruppe umfassend Triethylendiamin, Triethylamin und/oder Silamorpholin, wobei 2,2,4-Trimethyl-2-Silamorpholin besonders bevorzugt ist; und/oder
- wenigstens ein säureblockiertes Derivat eines tertiären Amins; aufweist.

6. Katalysatorkombination nach Anspruch 5, wobei die Kaliumverbindung, ausgewählt ist aus der Gruppe umfassend Kalium(2-ethyl-hexanoat) und/oder Kaliumacetat; die Zink- und/oder Zinn-organische-Verbindung, ausgewählt ist aus der Gruppe umfassend Metallsalze organischer Säuren, vorzugsweise Oktansäure, Ricinolsäure, Essigsäure, Ölsäure, Laurinsäure und/oder Hexansäure; und /oder Chelatkomplexe, vorzugsweise Acetylaceton, Benzoylaceton, Trifluoracetylaceton, Ethylacetoacetat, Salicylaldehyd, Cyclopentanon-2-carboxylat, Salicylaldehydimin; wobei Zink- und/oder Zinn-organische-Verbindung aus Salzen der Ricinolsäure und/oder 2-Ethylhexansäure besonders bevorzugt sind.

7. Katalysatorkombination nach Anspruch 5 oder 6, wobei die Katalysatorkombination 0,01 bis 3 Gewichtsteile Amin-Katalysator und 0,01 bis 2 Gewichtsteile Kalium-, Zink- und/oder Zinn-organische-Verbindung, bezogen auf 100 Gewichtsteile Polyol, aufweist.

8. Katalysatorkombination nach einem der Ansprüche 5 bis 7, wobei die Katalysatorkombination den Aminkatalysator und die Kalium-, Zink- oder Zinn-organische-Verbindung in einem molaren Mengenverhältnis von 1:0,05 bis 0,05:1 vorzugsweise 1:0,07 bis 0,07:1 und bevorzugt 1:0,1 bis 0,1:1 aufweist.

9. Katalysatorkombination nach einem der Ansprüche 5 bis 8, wobei die Katalysatorkombination zusätzlich Wasser und einen Stabilisator, vorzugsweise ein Polyethersiloxan, aufweist.

10. Katalysatorkombination nach einem der Ansprüche 5 bis 9, wobei die Katalysatorkombination zusätzlich Treibmittel, Biozide, Antioxidantien, Puffersubstanzen, Tensid und/oder Flammschutzmittel aufweist.

11. Polyurethanweichschaum, insbesondere offenzelliger Polyurethanweichschaum, mit erhöhter Rekatalysestabilität, erhältlich aus der Reaktion von Polyolen mit Isocyanaten unter Verwendung eines Katalysator/einer Katalysatorkombination nach einem der Ansprüche 1 bis 10.

12. Polyurethanweichschaum nach Anspruch 11 mit einer DMF-Emission von ≥ 0 µg/m³ und ≤ 5 µg/m³, vorzugsweise ≤ 1µg/m³ und besonders bevorzugt ≤ 0.1µg/m³.

13. Polyurethanweichschaum nach Anspruch 11 oder 12 mit einer Amin-Emission von ≥ 0 µg/g und ≤ 20 µg/g, vorzugsweise ≤ 10 µg/g und besonders bevorzugt ≤ 5 µg/g.

14. Polyurethanweichschaum nach einem der Ansprüche 11 bis 13, wobei der Polyurethanweichschaum mit erhöhter Rekatalysestabilität nach Temperaturbehandlung von 2 h bei 180°C eine Zugfestigkeit [kPa] von ≥ 75 aufweist.

15. Erzeugnis enthaltend einen Polyurethanweichschaum nach einem der Ansprüche 11 bis 14.
